# EUROPEAN PATENT APPLICATION

(11) **EP 1 744 542 A1**
(43) Date of publication of application: **17.01.2007**
(21) Application number: 05730195.4
(22) Date of filing: 12.04.2005
(51) Int. Cl.: H04N 5/00, H04N 5/76, H04Q 9/00

(54) **APPARATUS OPERATION DEVICE AND APPARATUS OPERATION METHOD**

(30) Priority: 23.04.2004 JP 2004128510
(71) Applicant: KABUSHIKI KAISHA TOSHIBA, Tokyo 105-8001 (JP)
(72) Inventor: KAKUI, Shingo, Toshiba Corporation, I.P. Division, Tokyo 105-8001 (JP)
(74) Representative: Henkel, Feiler & Hänzel
(86) International application number: PCT/JP2005/007049
(87) International publication number: WO 2005/104529

(57) **Abstract**

There are provided an apparatus operating device and an apparatus operating method capable of improving simplicity in operation of an apparatus by a user. By selecting operation items correlated hierarchically, an apparatus is operated by a command issued based on a selected operation item. Since it is possible to operate the apparatus by selecting the operation items correlated hierarchically, simplicity in operation of an apparatus by a user is improved.

## Description

### Technical Field

The present invention relates to an apparatus operating device and an apparatus operating method for operating an apparatus.

### Background Art

An apparatus operating device such as a remote controller is used for operating an apparatus such as a video recorder.
Here, there is disclosed a technology to display contents of an instruction manual and a three-dimensional model of a VTR (Video Tape Recorder) in a display unit of a remote controller device to allow operating of the VTR with this three-dimensional model (For example, refer to patent document 1).
Patent Document 1: JP-A 2000-184475 (KOKAI)

### Disclosure of the Invention

In the above prior art, operations of a VTR can be controlled by performing an operation corresponding to an actual VTR on the screen of the remote controller, but the operation on the actual VTR is complicated for users.
In view of the above, an object of the present invention is to provide an apparatus operating device and an apparatus operating method capable of improving simplicity in operation of an apparatus by a user.

The apparatus operating device according to the present invention includes an operation item storage unit which stores a plurality of operation items related to operations of an apparatus and correlated hierarchically with each other, a selecting means for selecting any one of the plurality of the stored operation items; a command issuing means for issuing a command to instruct an operation to the apparatus based on the selected operation item, and a transmission unit which transmits the generated command to the apparatus.

By selecting operation items correlated hierarchically by the selecting means, a command based on a selected operation item is issued and transmitted, and an apparatus can be operated by this command. Since it is possible to operate the apparatus by selecting the operation items correlated hierarchically, the user is not required to perform key operations corresponding to commands, and thus simplicity in operation of an apparatus by a user is improved.

An apparatus operating method according to the present invention includes a selecting step of selecting any one of a plurality of operation items related to operations of an apparatus and correlated hierarchically with each other, a command issuing step of issuing a command to instruct an operation to the apparatus based on the selected operation item, and a transmitting step of transmitting the issued command to the apparatus.

### Brief Description of Drawings

[FIG. 1] FIG. 1 is a block diagram showing the configuration of a remote controller as an apparatus operating device according to an embodiment of the present invention.
[FIG. 2] FIG. 2 is a perspective view of a remote controller.
[FIG. 3] FIG. 3 is a perspective view of the remote controller.
[FIG. 4] FIG. 4 is a conceptual diagram showing a conceptual configuration of an electronic manual.
[FIG. 5A] FIG. 5A is a view showing an operation item selection screen for selection of operation items of the electronic manual.
[FIG. 5B] FIG. 5B is a view showing an operation item selection screen for selection of operation items of the electronic manual.
[FIG. 5C] FIG. 5C is a view showing an operation item selection screen for selection of operation items of the electronic manual.
[FIG. 5D] FIG. 5D is a view showing an additional information input screen corresponding to a selected operation item.
[FIG. 6] FIG. 6 is a flowchart showing an example of a procedure of operating an operation target apparatus with the remote controller.
[FIG. 7] FIG. 7 is a schematic diagram showing a correspondence between operation contents with the remote controller and action contents (including transmission of a command) thereof.
[FIG. 8] FIG. 8 is a schematic diagram showing a correspondence of operation buttons of the remote controller, commands, modes of a video recorder, and operation contents.
[FIG. 9A] FIG. 9A is a view showing an operation screen displayed on a television connected to the video recorder during an operation with a general remote controller.
[FIG. 9B] FIG. 9B is a view showing an operation screen displayed on the television connected to the video recorder during an operation with the general remote controller.
[FIG. 9C] FIG. 9C is a view showing an operation screen displayed on the television connected to the video recorder during an operation with the general remote controller.
[FIG. 9D] FIG. 9D is a view showing an operation screen displayed on the television connected to the video recorder during an operation with the general remote controller.
[FIG. 9E] FIG. 9E is a view showing an operation screen displayed on the television connected to the video recorder during an operation with the general remote controller.

### Best Mode for Carrying out the Invention

Hereinafter, embodiments of the present invention will be described in detail with reference to the drawings.

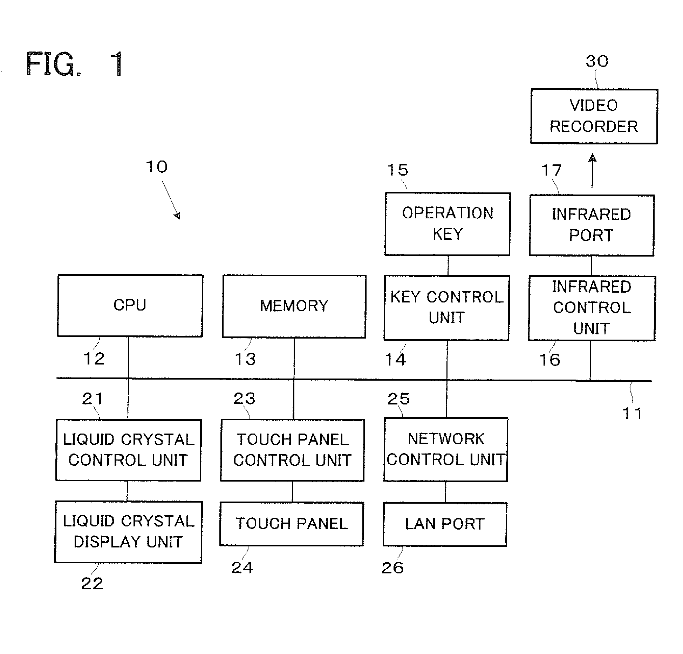

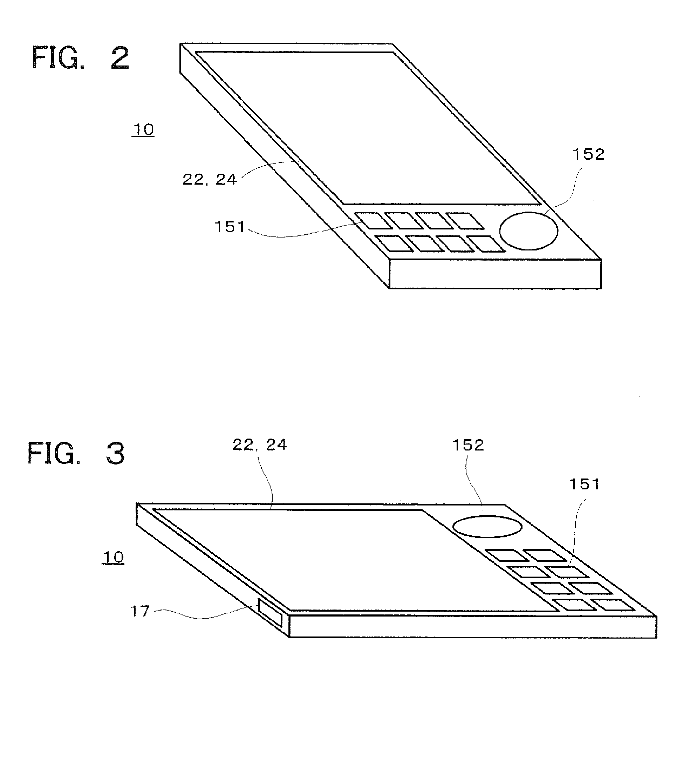

FIG. 1 is a block diagram showing the configuration of a remote controller 10 as an apparatus operating device according to an embodiment of the present invention. FIG. 2 and FIG. 3 are perspective views showing states of viewing the remote controller 10 from different directions respectively.
Note that instead of the remote controller 10, a general portable terminal device including a cellular phone, a portable computer, and the like may be used as the apparatus operating device.

As shown in FIG. 1, the remote controller 10 is constituted of a bus 11, a CPU (Central Processing Unit) 12, a memory 13, a key control unit 14, an operation key 15, an infrared control unit 16, an infrared port 17, a liquid crystal control unit 21, a liquid crystal display unit 22, a touch panel control unit 23, a touch panel 24, a network control unit 25, and a LAN port 26, and is capable of operating a video recorder 30 as an operation target apparatus.

The CPU 12 is operated by a program, functions as a command issuing means, and transmits a command for operating the video recorder 30 or the like from the infrared control unit 16. Further, the CPU 12 displays an image (operation item selection screen, additional information input screen) based on a later-described electronic manual on the liquid crystal display unit 22.
The memory 13 stores a program for enabling the CPU 12 to operate and the later-described electronic manual, and functions as an operation item storage unit. The memory 13 is generally a semiconductor memory such as RAM (Random Access Memory), ROM (Read Only Memory), EPROM, or the like, but also an HD (hard disk) or the like may be used.

The key control unit 14 is an interface between the input unit 15 and the CPU 12, and monitors input of information from the operation key 15 and outputs inputted information to the CPU 12.
The operation key 15 is an input device for inputting information. Based on information inputted with the operation key 15, commands for starting up (power ON) the video recorder 30 and operating it are issued.
Operation buttons 151 and a dial 152 shown in FIG. 2 and FIG. 3 correspond to the operation key 15. The dial 152 can be used to input numeric values or the like efficiently. Note that instead of the dial 152, a trackball may be used.

The infrared control unit 16 is an interface between the infrared port 17 and the CPU 12, and transmits an infrared signal from the infrared port 17 in response to instruction from the CPU 12. Examples of this signal include start-up (power ON), reproduce, fast-forward, stop, reverse, and a command (control code) such as reserve recording or the like in the video recorder 30. Further, the infrared control unit 16 outputs to the CPU 12 a signal corresponding to an infrared signal transmitted from the video recorder 30 and received in the infrared port 17.
The infrared port 17 has an infrared light-emitting element and a light-receiving element, and transmits and receives a signal by means of infrared.

The liquid crystal control unit 21 displays various images (for example, operation item selection screen, additional information input screen) on the liquid crystal display unit 22.
The touch panel control unit 23 is an interface between the touch panel 24 and the CPU 12, and detects a touched position on the touch panel 24 and outputs the touched position (coordinate values) to the CPU 12.
The touch panel 24 is constituted integrally with the liquid crystal display unit 22, and functions as a selecting means for selecting an operation item. For example, an operation item can be selected by touching a button displayed on the liquid crystal display unit 22 via the touch panel 24.

The network control unit 25 is an interface between the LAN port 26 and the CPU 12, and controls transmission and reception of information from the LAN port 26.
The LAN port 26 communicates with a network such as the internet.
The later-described electronic manual can be downloaded via the LAN port 26 and the network control unit 25. Also, information from the operation target can be transmitted via the LAN port 26.

### (Contents of the electronic manual)

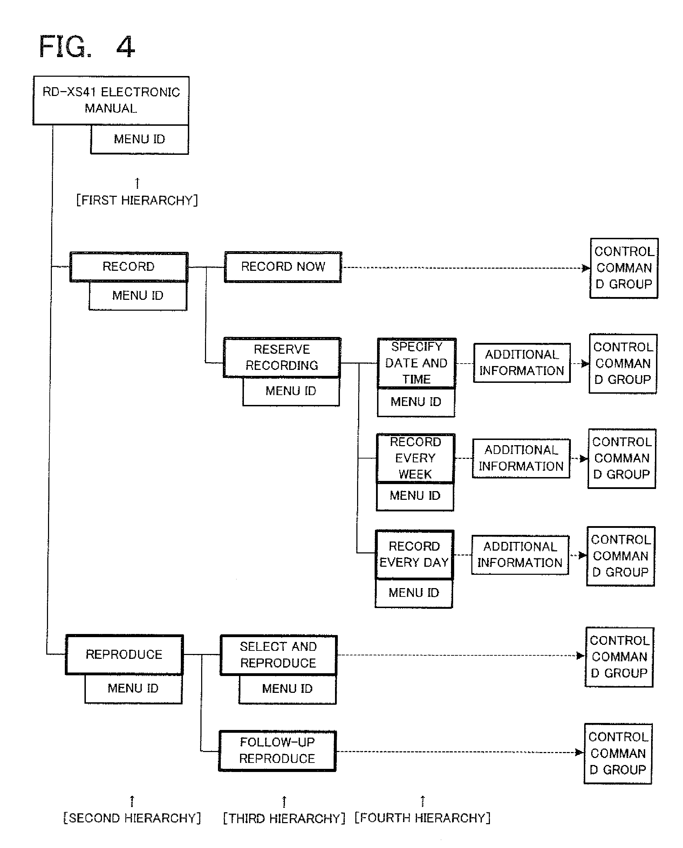

FIG. 4 is a conceptual diagram showing a conceptual configuration of the electronic manual. Further, FIG. 5A to FIG. 5D are views showing operation item selection screens for selection of operation items of the electronic manual and an additional information input screen corresponding to a selected operation item.
In this example, a video recorder 30 with a product code "RD-XS41" is assumed as the operation target apparatus.

As shown in FIG. 4, the electronic manual is configured by hierarchically arranging operation items.
Under "RD-XS41 Electronic Manual" of a first hierarchy (highest node) of the electronic manual, operation items of a second hierarchy, "Record" and "Reproduce" are arranged. Under the operation items "Record" of the second hierarchy, operation items of a third hierarchy, "Record Now" and "Reserve Recording" are arranged.
The operation item "Record Now" of the third hierarchy is at a lowest hierarchy and is correlated with a group of control commands for executing the "Record Now". Meanwhile, under the operation item "Reserve Recording" of the third hierarchy, there are operation items of a fourth hierarchy, "Specify Date and Time", "Record Every Week", "Record Every Day". Then, the operation items "Specify Date and Time" , "Record Every Week" , "Record Every Day" of the fourth hierarchy are at a lowest hierarchy and correlated respectively with additional information to be inputted and groups of control commands to be issued.

As above, this electronic manual branches from the highest node "RD-XS41 Electronic Manual" to lower hierarchies, and correlated with lowest nodes (for example, "Record Now" of the third hierarchy, "Record Every Week" of the fourth hierarchy) and groups of control commands (and additional information as necessary).

For selection of operation items in these hierarchies, an operation item selection screen (selection menu) is displayed on the liquid crystal display unit 22. "Menu IDs" shown in FIG. 4 are menu identifiers for identifying operation item selection screens from each other.
FIG. 5A is an operation item selection screen for selecting the operation items of the second hierarchy from the first hierarchy "RD-XS41 Electronic Manual". Buttons "Record" and "Reproduce" are displayed, and by operating these buttons via the touch panel 24, the operation items of the second hierarchy are selected.

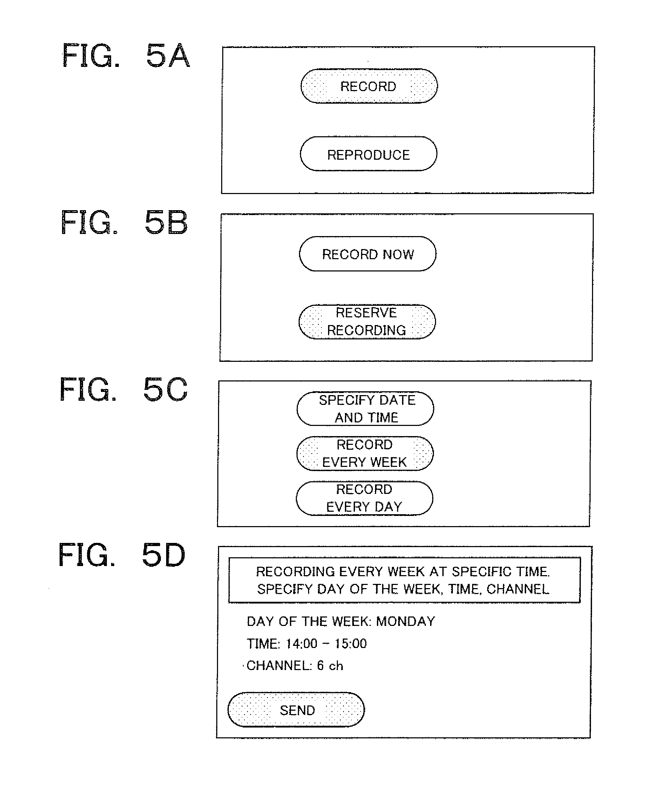

FIG. 5B is an operation item selection screen for selecting the operation items of the third hierarchy from the second hierarchy "Record Now". Buttons "Record Now" and "Reserve Recording" are displayed, and by operating these buttons via the touch panel 24, the selection items of the third hierarchy are selected.
FIG. 5C is an operation item selection screen for selecting the selection items of the fourth hierarchy from the "Reserve Recording" of the third hierarchy. Buttons "Specify Date and Time" , "Record Every Week", and "Record Every Day" of the fourth hierarchy are displayed, and by operating these buttons via the touch panel 24, the operation items of the fourth hierarchy are selected.

FIG. 5D shows an additional information input screen for inputting additional information corresponding to "Record Every Week" of the fourth hierarchy. Contents of an item selected by the user (record every week at specific time) and information required to be inputted (day of the week, time, channel) are displayed. The user inputs information according to the instruction of the additional information input screen. This input can be done using the operation key 15. Note that this view shows a state that a day of the week, time, and a channel are inputted.
By operating the "Send button" shown in this view via the touch panel 24, a group of control commands based on the selected operation item and the additional information inputted via the additional information input screen is issued and transmitted from the infrared port 17.

As above, the user can perform an operation of the video recorder 30 such as reserved recording by selecting an operation item of the lowest hierarchy on the hierarchically configured electronic manual, inputting the additional information corresponding to the selected operation item, and pushing the "Send" button.
The user can operate the video recorder 30 by selecting operation items ("desired things to do") in order from an upper hierarchy to a lower hierarchy of the electronic manual without being aware of commands.
This electronic manual defines how to combine commands according to operation contents. In other words, this electronic manual describes combinations of commands for realizing operation contents (operation items at the lowest hierarchy) which are final objectives of the user. As a result, an operation by the user becomes simple.

As can be seen from above, this electronic manual functions as an operation item-group of command correlation table that correlates operation items (and additional information as necessary) and groups of commands . However, this electronic manual is different from a mere correlation table in which one operation and one command are correlated one to one. Note that details thereof are described later.
By making this electronic manual changeable, the remote controller 10 can correspond to plural apparatuses.

### (Operating the remote controller 10)

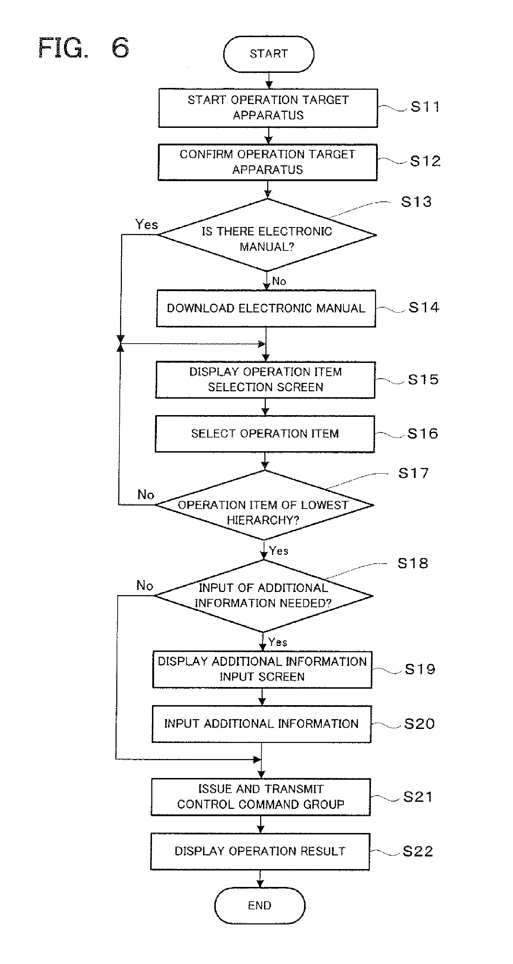

FIG. 6 is a flowchart showing an example of a procedure of operating the operation target apparatus with the remote controller 10.
(1) starting up the operation target apparatus (step S11) The user directs the remote controller 10 to the operation target apparatus and operates the operation key 15 to transmit a start-up command from the infrared port 17. The operation target apparatus is started up by this start-up command (power of the apparatus: ON).

(2) Confirming the operation target apparatus (step S12)
When the remote controller 10 is capable of operating plural kinds of operation target apparatuses, it is necessary to confirm the operation target apparatus. This is because commands used for scanning instruction thereof are different for each operation target apparatus.
1) For example, the user can input information denoting an operation target apparatus to the remote controller 10 to specify the operation target apparatus . As an example, the operation target apparatus can be selected by displaying a list of operation target apparatuses on the liquid crystal display unit 22 of the remote controller 10, and operating the touch panel 24.

2) Further, the operation target apparatus can also be confirmed without performing selection by the user. An apparatus is specified from the remote controller 10 and a command is transmitted thereto, and a product code is transmitted from the operation target apparatus side to the remote controller 10. By directing the remote controller 10 to a desired apparatus and transmitting a command from the infrared port 17, the command can be transmitted only to the specific apparatus.

3) Without performing one to one interactive communication in this manner, it is possible that the remote controller 10 obtains a product code of an operation target apparatus.
For example, on the operation target apparatus side, the time of turning on the power is stored, and in response to a command from the remote controller 10, the start time and a product code are transmitted. The remote controller 10 judges that a latest started apparatus is the operation target. By transmitting a command from the LAN port 26, the command can be transmitted to plural apparatuses connected to the network.
As above, a method of confirming the operation target apparatus is described. Note that if the operation target apparatus is specified in the remote controller 10, this confirmation operation is unnecessary.

(3) Judging presence of the electronic manual for the operation target apparatus and downloading (steps S13, S14)
It is judged whether the electronic manual for the operation target apparatus is stored in the memory 13 of the remote controller 10 or not. This judgment can be used using the obtained product code.
If the electronic manual is not stored, the electronic manual is downloaded from the internet or the like via the LAN port 26 (step S14).

(4) Displaying an operation item selection screen and inputting selection (steps S15 to S17)
On the liquid crystal display unit 22 of the remote controller 10, an operation item selection screen corresponding to a menu ID of the highest hierarchy of the electronic manual is displayed. For example, the operation item selection screen (FIG. 5A) corresponding to the menu ID of the " RD-XS41 Electronic Manual" of FIG. 4 is displayed.
The user selects an operation item of a lower hierarchy of the electronic manual with a button on the operation item selection screen. Specifically, an operation item can be selected by touching a button displayed on the liquid crystal display unit 22 via the touch panel 24.

This selection of an operation item is repeated until an operation item of the lowest hierarchy of the electronic manual is selected. For example, the operation item "Record" is selected in the operation item selection screen of FIG. 5A, the operation item "Reserve Recording" is selected in the operation item selection screen of FIG. 5B, and further the operation item "Record Every Week" is selected in the operation item selection screen of FIG. 5C, thereby selecting the operation item "Record Every Week" of the fourth hierarchy of FIG. 4.

(5) Judging necessity of input of additional information and inputting additional information (steps S18 to S20)
It is judged whether it is needed to input additional information corresponding to the selection item of the lowest hierarchy. This judgment can be performed with reference to the electronic manual.
As shown in FIG. 4, the operation item "Record Now" does not need input of additional information. Meanwhile, the operation item "Record Every Week" needs input of a day of the week, time, and a channel, and the additional information input screen (reserve recording screen) shown in FIG. 5D is displayed, and input of additional information (parameters) using this additional information input screen is performed.

(6) Issuing and transmitting of a control command and displaying an operation result (steps S21, S22)
Based on the selected operation item (and further the inputted additional information), agroupofcommands is issued and transmitted to the operation target apparatus from the remote controller 10. Then, the operation target apparatus operates in response to this command.
The remote controller 10 obtains a control result via the network. For example, in the case of reserving recording, the set date and time, channel, and so forth are displayed on the remote controller 10. Thus the user can confirm that his/her operation is accepted.

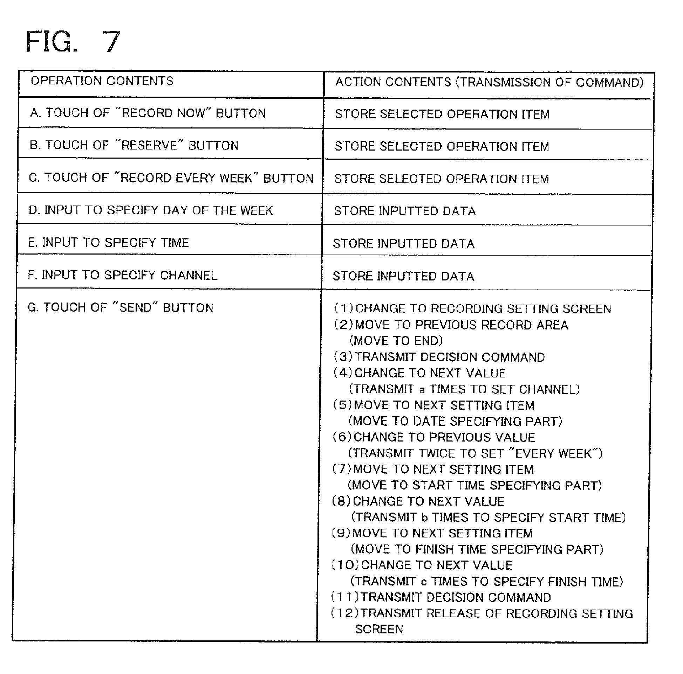

FIG. 7 is a schematic diagram showing a correspondence between operation contents with the remote controller 10 and action contents (including transmission of a command) thereof.
When the user touches the "Record" button, the "Reserve" button, and the "Record Every Week" button, the additional information input screen (reserve recording input screen) is selected. At this time, the remote controller 10 recognizes operation items to be selected.
Using the additional information input screen, input of additional information for specifying a day of the week, time, and a channel is performed. At this time, the remote controller 10 stores the inputted information.
Thereafter, by touching the "Send" button, a group of control commands and a group of commands based on the additional information are issued and transmitted.

In FIG. 7, as the commands, a group of commands (1) to (12) is issued and transmitted. This group of commands is basically decided by selection of the operation command "Record Every Week". The inputted additional information is used for deciding the number of transmissions a, b, c in (4), (8), (10).
As described later, the group of commands itself issued and transmitted at this time is identical to that in the case of a normal operation with the remote controller 10. Specifically, for the group of commands transmitted in FIG. 7, conventional commands of the operation target apparatus can be used as they are.

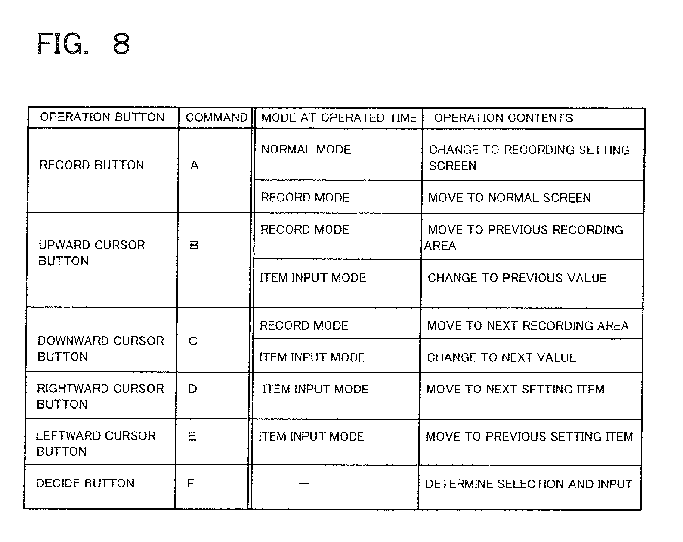

FIG. 8 is a schematic diagram showing a correspondence of operation buttons of the remote controller, commands, modes of the control target apparatus, and operation contents in the video recorder 30 as the operation target apparatus. Note that it is not in question here whether the remote controller is the same as the remote controller 10 shown in FIG. 1 or not.

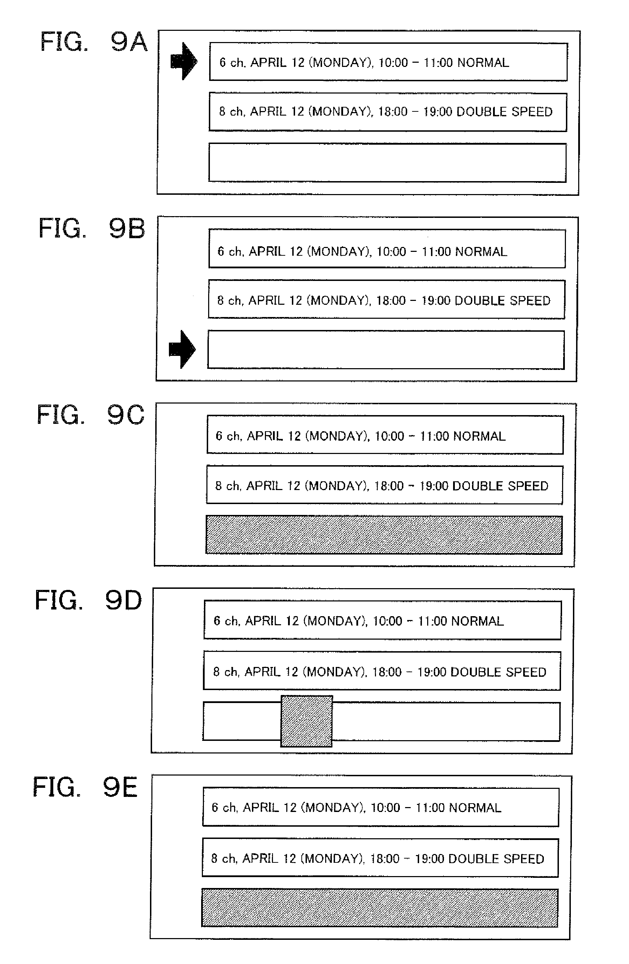

FIG. 9A to FIG. 9E are views showing operation screens displayed on a television connected to the video recorder 30 during an operation with a general remote controller.

(1) A "record button" on the remote controller is pressed and a command A is transmitted to the video recorder 30 to change the video recorder 30 from a normal mode to a record mode. At this time, a recording setting screen is displayed on the television (refer to FIG. 9A).
(2) An "upward cursor button" is pressed to transmit a command B to the video recorder 30, and the cursor is moved to an empty input position in the end (refer to FIG. 9B).
(3) A "decide button" is pressed to transmit a command F to the video recorder 30 to select the empty input position on the reserve recording screen (refer to FIG. 9C).

(4) A "downward cursor button" is pressed to transmit a command C to the video recorder 30 to select a channel (refer to FIG. 9D) . Depending on the channel selected at this time, the number a of times of pressing the downward cursor button (the number of times of transmitting the command C) is determined.
(5) A "rightward cursor button" is pressed to transmit the command D to move the cursor to the next setting item (month and date specifying part) (refer to FIG. 9D).
(6) The "upward cursor button" is pressed to transmit the command B to the video recorder 30 to specify the month and date of recording. Here, the upward cursor button is pressed twice to transmit the command B twice to the operation target to select the "weekly" recording (refer to FIG. 9D).

(7) The "rightward cursor button" is pressed to transmit the command D to move the cursor to the next setting item (start time specifying part) (refer to FIG. 9D).
(8) The "downward cursor button" is pressed to transmit the command C to the video recorder 30 to specify the start time of recording. Here, the "downward cursor button" is pressed b times to transmit the command C b times to input the start time (refer to FIG. 9D).
(9) The "rightward cursor button" is pressed to transmit the command D to move the cursor to the next setting item (finish time specifying part) (refer to FIG. 9D).
(10) The "downward cursor button" is pressed to transmit the command C to specify the finish time of recording , Here, the "downward cursor button" is pressed c times to transmit the command C c times to input the finish time (refer to FIG. 9D).

(11) The decide button is pressed to transmit the command F to the operation target to determine the reservation input (refer to FIG. 9E).
(12) The record button of the remote controller 10 is pressed to transmit the command A to the operation target to change it from the record mode to the normal mode. At this time, according to a reply from the operation target, a normal screen is displayed on the television.

By the above operation, the commands are transmitted as follows. Specifically, (1) command A, (2) command B, (3) command F, (4) a times of command C, (5) command D, (6) twice of command B, (7) command D, (8) b times of command C, (9) command D, (10) c times of command C, (11) command F, and (12) command A.
The group of commands transmitted in the above (1) to (12) is exactly the same as the group of commands transmitted in (1) to (12) of FIG. 7.

As shown in FIG. 4 and FIG. 7, in this embodiment, it is not necessary that the buttons operated by the user and the commands to be transmitted have one to one relationship. Further, operating a cursor for moving to an empty input area or a setting item (a day of the week, time, or the like) is not necessary, which facilitates intuitive input.

As above, according to this embodiment, it becomes possible to operate a complicated digital apparatus such as HDD/DVD recorder having plenty of functions in a wizard form or a guidance form for example. Therefore, it becomes possible to operate an apparatus by merely selecting desired things to do without thoroughly reading a thick instruction manual.

Specifically, a group of control commands is selected by selecting operation items ("desired things to do") hierarchically on the electronic manual, so that the user is not needed to memorize the operation items. When an operation item of the lowest hierarchy is selected, an additional information input screen is displayed as necessary, and inputting of various parameters (setting) can be performed according to the instruction on the screen. In this manner, corresponding to a selected operation item and inputted additional information, a group of commands control instructions) can be issued and transmitted to operate the apparatus.

Further, by providing the electronic manual separately from the remote controller, it easily corresponds to the case that, for example, functions are added by updating the firmware of the apparatus.
Since the product code or the like of an apparatus is used, it becomes possible to operate plural apparatuses by one remote controller. Moreover, it is only necessary to download the electronic manual, so that the user is not required to perform specific setting of the remote controller, as in conventional multi-remote controller.

Furthermore, operating of the apparatus is possible with only the screen of the remote controller 10 side, and therefore, when performing reserved recording or the like for example with the video recorder 30, it is not necessary to turn the power of the television. As a result, operating of an apparatus (for example, a home server) that does not have a display device can be performed easily.

### (Other Embodiments)

Embodiments of the present invention are not limited to the above embodiment and can be expanded or modified, and a modified or changed embodiment is included in the technical scope of the present invention.

## Claims

1. An apparatus operating device, comprising:
an operation item storage unit which stores a plurality of operation items related to operations of an apparatus and correlated hierarchically with each other;
a selecting means for selecting any one of the plurality of the stored operation items;
a command issuing means for issuing a command to instruct an operation to the apparatus based on the selected operation item; and
a transmission unit which transmits the generated command to the apparatus.

2. The apparatus operating device according to claim 1, further comprising
a display unit which displays the operation items,
wherein said selecting means selects an operation item based on the operation items displayed on said display unit.

3. The apparatus operating device according to claim 1, further comprising
a data input means for inputting data corresponding to the selected operation item,
wherein said command issuing means issues a command based on the selected operation item and the inputted data.

4. The apparatus operating device according to claim 1,
wherein said command issuing means issues a command based on an operation item of a lowest hierarchy.

5. The apparatus operating device according to claim 4,
wherein said command issuing means issues a group of commands in which a plurality of commands are converged.

6. The apparatus operating device according to claim 1, further comprising
a reception unit which receives information of the plurality of the operation commands.

7. An apparatus operating method, comprising the steps of:
selecting any one of a plurality of operation items related to operations of an apparatus and correlated hierarchically with each other;
issuing a command to instruct an operation to the apparatus based on the selected operation item; and
transmitting the issued command to the apparatus.

8. The apparatus operating method according to claim 7, further comprising the step of:
displaying the operation items,
wherein in said selecting step, an operation item is selected based on the displayed operation items.

9. The apparatus operating method according to claim 7, further comprising the step of:
inputting data corresponding to the selected operation item,
wherein in said command issuing step, a command is issued based on the selected operation item and the inputted data.

10. The apparatus operating method according to claim 7,
wherein in said command issuing step, a command is issued based on an operation item of a lowest hierarchy.

11. The apparatus operating method according to claim 10,
wherein in said command issuing step, a group of commands in which a plurality of commands are converged is issued.

12. The apparatus operating method according to claim 7, further comprising the steps of:
receiving information of the plurality of the operation commands; and
storing the received information of the operation items.
